# EUROPEAN PATENT APPLICATION

(11) **EP 3 138 872 A1**
(43) Date of publication of application: **08.03.2017**
(21) Application number: 15461557.9
(22) Date of filing: 07.09.2015
(51) Int. Cl.: C08K 3/00, C08K 3/26, C09D 5/34, C08L 23/08

(54) **THERMOPLASTIC WOOD FILLER AND WAY OF PRODUCTION OF THE THERMOPLASTIC WOOD FILLER**

(71) Applicant: Politechnika Rzeszowska, 35-959 Rzeszow (PL)
(72) Inventor: Zarzyka, Iwona, 35-512 Rzeszów (PL); Czerniecka-Kubicka, Anna, 35-601 Rzeszów (PL); Fracz, Wieslaw, 35-083 Rzeszów (PL)
(74) Representative: Rumpel, Alicja

(57) **Abstract**

Thermoplastic wood filler which is a polymer composite including a filling agent dispersed in a polymer matrix which is in the form of copolymer of polyethylene and poly(vinyl acetate), and the filling agent is either a mixture of calcium carbonate and silica or alumina. In addition it is favourable to add mineral oil in the quantity from 3 to 20 % of mass, and in particular 3 % of mass and pigment in the form of powder, in the quantity up to 3 % of mass, and in particular 1 % of mass. The share of the filling agent in the polymer matrix is from 50 to 80 % of mass, favourably from 50 to 65 % of mass of calcium carbonate and from 5 to 20 % of mass of silica with commercial name N 0.1-0.3, or 50 % of mass of alumina.

The way of production of the composite is characterised in that in the first stage the mixture of polymer matrix, non-organic filling agents, mineral oil and pigment is homogenised, and in the second stage the homogeneous mixture is embossed in an extruder with the reservation that it is favourable to use the one- or two-screw extruder.

## Description

The thermoplastic wood filler to fill in declines in wooden elements intended in particular to internal use.

Currently on the market there are different solvent and non-solvent fillers. Solvent fillers are usually applied for manual application and a quite long period of time is needed before the filler forming a filling of decline in a wooden element achieves its final properties.

In addition, it is very difficult to produce the filler with desired physical properties such as adhesion, consistency and connected with this appropriate quantity of solvent. This causes that a number of these fillers, after drying, shrink from the surrounding edge and leave noticeable cracks between the filling and surrounding wooden element. In some cases this shrinking is so large that the fillings fall out exposing undesirable hollows.

One of the proposed on the market solvent fillers is filler based on acrylic resin (6 - 14 % of mass) including approx. 13 - 35 % of mass of water and several mineral fillers: talc (3 - 10 % of mass), barite (3 - 10 % of mass), calcium carbonate (40 - 65 % of mass) and aluminosilicate clay (3 - 12 % of mass) (Canadian patent CA 1093724 of 27.27.19 77 and American patent US19770819466 of 27.07.1977). This filler may be used both to soft and hard kinds of wood, it is easy to spread, is resistant to shrinking while drying and has a natural colour of wood. Composition of the applied acrylic resin is selected so that temperature of vitrification falls within the range of 0 - 25° °C. This filler not completely presented appropriate usable parameters therefore its composition has been improved. This is described in the US patent 4345044 of 17.09.1982. In accordance with the description in order to improve properties of the filler barite has been eliminated and the same proportions of acrylic resin, calcium carbonate and water have been used as well as of 5 - 18 % of mass of talc and 0 - 15 % of mass of aluminosilicate clay. In addition, it was emphasised that it is favourable that the average size of particles of talc was approx. 9 microns and average size of particles of clay was approx. 5 microns.

In addition, on the market there are also applied hot-setting, solvent fillers for wood. The American patent (US 2630395 of 3.03.1953) describes the pigment polymer composition for filling grooves and declines in wooden surfaces and in particular in furniture of such wood as: mahogany, oak and walnut. This filler shows good adhesion both in reference to the surface of wood and coatings put on during completion of wood. The filler including, as a carrier, hot-setting resins such as e.g. phenol-formaldehyde resin is better than other conventional fillers in terms of adhesion and speed of hardening (fifteen minutes up to four hours after application of the filler).

The filler includes 70 - 90 parts of hot-setting resin per 10 - 30 parts of fatty oil and 70 - 90 parts of pigment per 10 - 30 parts of permanent adhesive (hot-setting resin and fatty oil), which results from limited absorption of oil by the pigment. Exemplary precise composition is as follows: 8 parts of raw linseed oil, 50 parts of pigment, 110 parts of sand, 10 parts of water, 25 parts of monoether of ethylene glycol and 64 parts of 50 % water solution of urea-formaldehyde resin.

Existence of non-volatile oil such as mineral oil or saturated oil or non-saturated fatty oil in composition of the filler based on hot-setting resin whose hardening is preferred after addition of acid stiffeners, pigments and volatile substances of solvents causes that the filler achieves good adhesion to surface of wood and coatings put on this resin. It is worth mentioning the fact that a number of hot-setting resins are insoluble or not-compatible with fatty oils.

The advantage of this filler is the possibility of easy application because hardening of the resin starts only after 30 minutes. In turn the disadvantage is the toxicity due to application of formaldehyde and necessity to warm up to temperature of 60°C in order to completely harden the filler.

Another solution includes application of a composite filler for wood showing exceptional quickly-drying properties, which is favourable from the economic viewpoint. In addition, it may be used for carrying out finishing operations in permanent system as described in the patent US2568864. The filler is characterized with low content of non-volatile adhesive, which eliminates the danger of swelling of the filler.

The filler has been obtained by mixing in high concentration of neutral and dissoluble pigments in liquid carrier containing hydrocarbon with temperature of boiling of 110 - 215°C, including at least 25 % of aromatic hydrocarbons; compatible concentrating agent which may be non-volatile or volatile; surface-active agent appropriate to moisten pigments in unfavourable conditions, connected with application of the product. Although the liquid carriers moistening the pigment in the filler for wood may include non-volatile materials which are usually used in adhesives, then concentration of non-volatile materials in the carrier in relation to the pigment is insufficient to generate strong reaction bonding the pigment to create coherent pigment mass after loss of volatile components. Therefore, the said filler includes six parts or less bonding agent per each 100 parts of pigment, whereas typical fillers for wood usually include at least two times less non-volatile adhesives. According to the invention the filler should include: alkyd resin in linseed oil (67 % of oil) - 2 % of mass; raw linseed oil - 1 % of mass; dissoluble pigment - 4.1 % of mass; crude oil hydrocarbons with high capability of dissolving and with boiling point 175 - 215°C - 3 % of mass; hydrocarbons of crude oil with high capability of dissolving and with boiling point 130 - 190°C - 19.6 % of mass; moistening agents - 0.2 % of mass; water - 0.7 % of mass; neutral pigment - 69.4 % of mass.

Solvent fillers may be based on volatile organic solvents. One of these types of solutions is the filler described in the patent: US6036761. The patent concerns the filler based on organic solvents, nitrocellulose, calcium carbonate, silicate clay and silicate magnesium or their mixture as well as wood flour. The filler for wood according to the invention is easy to be applied, dries in relatively short time, may be coloured to adapt appearance to surrounding wood in which it is used.

The filler includes: organic solvent (acetone, ethyl-methyl ketone, paraffin) in the quantity of 25 - 38 % of mass, nitrocellulose 3 - 8 % of mass, calcium carbonate 40 - 50 % of mass, magnesium silicate, clay silicate or their mixture 0.5 - 10 % of mass, wood flour 4 - 12 % of mass.

There are also known and applied non-solvent fillers for wood. The patent US5658379 describes the filling mass for products of wood, especially those intended for application in rooms. The filler includes mixture of calcium sulphate (VI) and calcium oxide or compound creating calcium oxide while heating up at least one mineral pigment and agent delaying creation of the filling mass e.g. protein hydrolysate or dipotassium tartrate. The filler is intended for products of wood which are to be applied in rooms and furniture, fireplaces and panels, and especially those which are to be coloured and those which may be moistened during the stage of finishing.

The filler is created by heating up the mixture of calcium sulphate(VI), in particular hydrated calcium sulphate(VI) and calcium oxide or compound which decomposes after heating up with generation of calcium oxide and in particular calcium carbonate. The mixture is heated up to remove water from it and obtain proper consistency of the filler.

Another non-solvent filler is based on polymer composite on polyethylene matrix shown in CA816752. It is a solid polymer composite with such consistency which enables gradual application of the filler leading to complete filling of a decline in wood. Colour of the composition may be selected in the colour and tone of the final product. Composition of the filler is as follows: esterified tall oil 23 - 32 % of mass, oxidised wax of Fisher-Tropsch 2 - 8 % of mass, polyethylene (with gram-atom 2000 - 3000 g/mol) 3 - 12 % of mass, oxidised microcrystalline wax 15 - 25 % of mass, paraffin wax 15 - 25 % of mass, soft microcrystalline wax 12 - 20 % of mass, pigment 1 - 6 % of mass, talc 1 % of mass.

The non-solvent, thermoplastic filler according to the invention is formed by the polymer composite based on copolymer of polyester and polyolefin and as the filler there is used calcium carbonate, silica or alumina or mixture of at least two components. In addition, the mass include mineral oil and at least one pigment. The filler according to the invention is easy to be applied, becomes harder in relatively short time and may be coloured to adapt appearance to surrounding wood on which it is used. Favourably there is used such copolymer of polyethylene and poly(vinyl acetate), which includes 18 - 32 % of mass of poly(vinyl acetate). Favourably there is also used a mixture of calcium carbonate and silica. Further benefits are obtained if there are preserved relevant proportions of silica and calcium carbonate towards each other and towards the polymer matrix. It is necessary to use 50 - 80 % of mass of the filler towards the polymer matrix. It is also favourable to preserve the following proportion between the silica and calcium carbonate: 1 : 2.5 or 1 : 6 or 1 : 13. In addition, there is favourably used calcium carbonate with size of particles below 16 µm, silica with size of particles 0.1 - 0.3 µm, and alumina with size of particles below 5 µm. To the polymer composite it is favourable to introduce mineral oil. And further benefits are obtained if oil is used in the quantity of 3 - 20 % of mass towards the polymer matrix. In order to obtain the filler with desired colour it is also favourable to introduce an appropriate pigment to the composite. Further benefits are obtained if the pigment is introduced in the form of powder in the quantity of up to 3 % of mass towards the polymer matrix.

The way of production of the filler including the filling agent dispersed in the polymer matrix in the form of copolymer of polyethylene and poly(vinyl acetate) with non-organic filling agent according to the invention is characterized in that in the first stage the filling non-organic agent homogenizes with the polymer matrix, mineral oil and pigment and then the homogeneous mixture is embossed in an extruder. Favourably in the second stage as the extruder there is used one- or two-screw extruder. Further benefits in the form of uniform filler are obtained if the extrusion is carried out with rotations of the extruder 25 - 50 rotations/min with temperature of particular zones of the extruder set as follows: bunker 30°C, I zone 65 - 70°C, II zone 105 - 120°C, III zone 120 - 130°C, head 135 - 145°C.

Application of the filler in the form of polymer composite including the filling agent dispersed in the polymer matrix in the form of copolymer of polyethylene and poly(vinyl acetate) with non-organic filling agent (alumina, calcium carbonate and silica), mineral oil and pigment, according to the invention is characterized in that it is envisaged as the filling of declines in wooden elements applicable inside rooms. However, it is possible to apply the filler for wooden elements exploited in external conditions.

Solid, thermoplastic filler may be in turn heated up and cooled without a change of its properties during gradual filling of wooden declines up to their complete filling. The filler is basically neutral, cream and may be coloured by means of relevant pigments added to achieve proper colour effects. Colour of the filler may be matched to the final colour of a wooden element.

The filler has perfect adhesion to wood, is non-toxic, with low content of volatile agents. After application, the filler has relatively short time to achieve the final parameters after which it may be polished or finished in another way.

The filler may be polished without blocking abrasive paper or other abrasive materials.

It is favourable that the filler does not crack or does not shrink after drying.

According to the invention there has been prepared thermoplastic filler, parameters of its production and applications i.e. polymer composite based on copolymer of polyethylene and poly(vinyl acetate), in particular in the commercial form Elvax® 410, Elvax® 210 and Elvax® 150 of the company: DuPont or Ateva 1850A, 2810A and 3325AC of the company: KRAHN CHEMIE Polska Sp. z o.o. and non-organic filling agent: alumina in particular in the commercial form with commercial name: alumina of the company: Welte, calcium carbonate, in particular in the commercial form with commercial name: Omyacarb 15-VA of the company: Omya Sp. z o.o. and silica, in particular in the commercial form with commercial name: N 0.1-0.3 of the company: Sandeco S.A. and mineral oil, in particular in the commercial form with commercial name: base oil BS 30/90 of the company: Lotos Oil, and pigment, in particular in the commercial form with commercial name Tenax of the company SYNTETYK s.c., produced with the use of one- or two-screw extruder.

Obtainment of the thermoplastic filler of copolymer of polyethylene and poly(vinyl acetate) and alumina, calcium carbonate and silica, mineral oil and pigment aims at obtaining the filler with appropriate consistency and parameters enabling application of this mass to declines in wooden elements in increased temperature 130 - 160°C by means of a pistol or in automatised form i.e. by means of a special dosing device, working permanently.

The way according to the invention, in order to obtain the filler for copolymer of polyethylene and poly(vinyl acetate) and non-organic filling agent as well as mineral oil and pigment, all components are homogenised and the homogeneous mixture is embossed in one- or two-screw extruder.

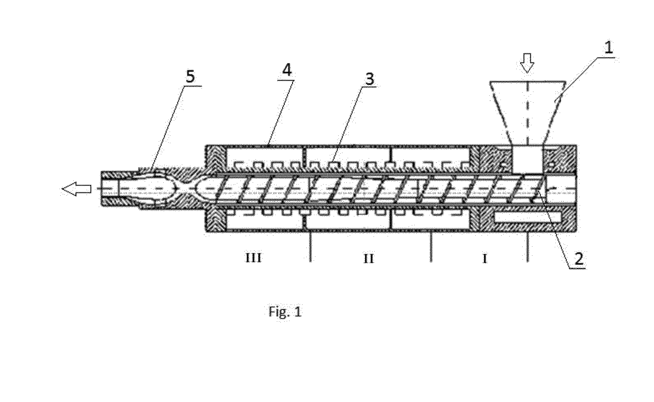

The subject of the invention is explained in more detail in examples not limiting its scope of protection and the figure which shows the extruder in longitudinal section in view for a side.

### Example 1

The filler including the filling agent dispersed in the polymer matrix in which the polymer matrix is in the form of copolymer of polyethylene and poly-(vinyl acetate) with commercial name Elvax or Ateva and the filling agent forms calcium carbonate with commercial name Omyacarb 15-VA and silica with commercial name N 0.1-0.3, mineral oil with commercial name BS 30/90 and pigment with commercial name Tenax has been produced in such a way that the mixture of filling agents with copolymer of polyethylene and poly(vinyl acetate), mineral oil and homogeneous pigment with content of commercial calcium carbonate in copolymer of polyethylene and poly(vinyl acetate) amounting to in turn: 65, 60 and 55 and 50 % of mass and with content of commercial silica 5, 10 and 15 and 20 % of mass, with content of mineral oil 3 or 5 % of mass and with content of pigment up to 3 % of mass. The homogenised mixture has been introduced to the extruder consisting of a head 5, bunker 1, heater 3, casing 4 and screw 2 working with speed of 40 rotations/min. Particular zones were achieved in temperature: bunker 25°C, I zone 65°C, II zone 120°C, III zone 130°C, head 5 140°C. Depending on the quantity of introduced filling agent in the polymer matrix, the filler has been obtained with a little different easiness of flowing and exploitation parameters which were confirmed in tests.

### Example 2

The filler as in example No. 1 was obtained in the following way: alumina with commercial name alumina was applied as the filling agent. Content of alumina in the polymer composite was from 50 to 70 % of mass. The filling agent, copolymer of polyethylene and poly(vinyl acetate), mineral oil and pigment were homogenised with content of mineral oil 3 or 5 % of mass and with content of pigment up to 3 % of mass. The homogenised mixture has been introduced to the extruder consisting of a head 5, bunker 1, heater 3, casing 4 and screw 2 working with speed from 25 to 40 rotations/min. Particular zones were achieved in temperature: bunker 25°C, I zone 65°C, II zone 120°C, III zone 130°C, head 140°C. Depending on the quantity of introduced filling agent in the polymer matrix, the filler has been obtained with a little different easiness of flowing and exploitation parameters which were confirmed in tests.

According to the invention there has been prepared thermoplastic filler, parameters of its production and applications i.e. polymer composite based on copolymer of polyethylene and poly(vinyl acetate), in particular in the commercial form Elvax® 410, Elvax® 210 and Elvax® 150 of the company: DuPont or Ateva 1850A, 2810A and 3325AC of the company: KRAHN CHEMIE Polska Sp. z o.o. and non-organic filling agent: alumina in particular in the commercial form with commercial name: alumina of the company: Welte, calcium carbonate, in particular in the commercial form with commercial name: Omyacarb 15-VA of the company: Omya Sp. z o.o. and silica, in particular in the commercial form with commercial name: N 0.1-0.3 of the company: Sandeco S.A. and mineral oil, in particular in the commercial form with commercial name: base oil BS 30/90 of the company: Lotos Oil, and pigment, in particular in the commercial form with commercial name Tenax of the company SYNTETYK s.c., produced with the use of one- or two-screw extruder.

Obtainment of the thermoplastic filler of copolymer of polyethylene and poly(vinyl acetate) and alumina, calcium carbonate and silica, mineral oil and pigment aims at obtaining the filler with appropriate consistency and parameters enabling application of this mass to declines in wooden elements in increased temperature 130 - 160°C by means of a pistol or in automatised form i.e. by means of a special dosing device, working permanently.

The way according to the invention, in order to obtain the filler for copolymer of polyethylene and poly(vinyl acetate) and non-organic filling agent as well as mineral oil and pigment, all components are homogenised and the homogeneous mixture is embossed in one- or two-screw extruder.

The invention is applied as thermoplastic filling of declines in wooden elements.

## Claims

1. Thermoplastic wood filler including the filling agent dispersed in the polymer matrix in presence of mineral oil and pigment is **characterized in that** the polymer matrix is in the form of copolymer of polyethylene and poly(vinyl acetate), and the filling agent of calcium carbonate and silica or alumina.

2. The filler according to claim 1 is **characterized in that** the share of the filling agent in the polymer matrix is from 50 to 80 % of mass.

3. The filler according to claim 2 is **characterized in that** the share of the filling agent in the polymer matrix is from 70 % of mass.

4. The filler according to claim 1 or 2 or 3 is **characterized in that** it is favourable to preserve the mass proportions between silica and calcium carbonate which come to 1 : 2.5

5. The filler according to claim 1 or 2 or 3 is **characterized in that** it is favourable to preserve the mass proportions between silica and calcium carbonate which come to 1 : 6

6. The filler according to claim 1 or 2 or 3 is **characterized in that** it is favourable to preserve the mass proportions between silica and calcium carbonate with come to 1 : 13.

7. The filler according to claim 1 or 2 or 3 or 4 or 5 of 6 is **characterized in that** the share of mineral oil in the polymer matrix is from 3 to 20 % of mass.

8. The filler according to claim 7 is **characterized in that** the share of mineral oil in the polymer matrix is 3 % of mass.

9. The filler according to claim 1 or 2 or 3 or 4 or 5 or 6 or 7 or 8 is **characterized in that** the share of pigment in the polymer matrix is up to 3 % of mass.

10. The filler according to claim 9 is **characterized in that** the share of pigment the polymer matrix is 1 % of mass.

11. The way of production of the filler including the filling agent dispersed in the polymer matrix in the form of copolymer of polyethylene and poly-(vinyl acetate) with filling agent of calcium carbonate and silica and mineral oil is **characterized in that** in the first stage all components are homogenised and next the homogeneous mixture is embossed in an extruder.

12. The way of producing the filler according to claim 11 is **characterized in that** as the extruder there is applied an extruder consisting of a head 5, bunker 1, heater 3, casing 4 and screw 2, one- or two-screw extruder.

13. The way of producing the filler according to claim 11 or 12 is **characterized in that** the extrusion is carried out with rotations of the extruder of 25 - 50 rotations/min.

14. The way of producing the filler according to claim 13 is **characterized in that** the extrusion is carried out with rotations of the extruder of 40 rotations/min.

15. The way of producing the filler according to claim 11 or 12 or 13 or 14 is **characterized in that** the extrusion is carried out with temperatures of particular zones of the extruder set as follows: bunker 30°C, I zone 65 - 70°C, II zone 105 - 120°C, III zone 120 - 130°C, head 135 - 145°C.
